# EUROPEAN PATENT SPECIFICATION

(11) **EP 1 606 365 B1**
(45) Date of publication and mention of the grant of the patent: **24.09.2008**
(21) Application number: 04719664.7
(22) Date of filing: 11.03.2004
(51) Int. Cl.: C09J 7/02

(54) **ADHESIVE TAPE AND METHOD OF ATTACHING THE SAME**
KLEBBAND SOWIE DAVON GEBRAUCH MACHENDES KLEBVERFAHREN
BANDE ADHESIVE ET PROCEDE DE FIXATION DE CELLE-CI

(30) Priority: 14.03.2003 JP 2003070719
(43) Date of publication of application: 21.12.2005
(73) Proprietor: Tsuchiya Co. Ltd., Nagoya-shi, Aichi 460-8330 (JP)
(72) Inventor: MORISAKI, Hiroshi, Naka-ku, Nagoya-shi, Aichi 460-8330 (JP); TANAHASHI, Norio, Naka-ku, Nagoya-shi, Aichi 460-8330 (JP)
(74) Representative: Myon, Gérard Jean-Pierre
(86) International application number: PCT/JP2004/003249
(87) International publication number: WO 2004/081135

(56) References cited:
- EP-A- 1 002 846
- DE-A1- 10 123 979
- JP-A- 6 240 210
- JP-A- 2000 160 115
- JP-U- 2 000 353
- US-A1- 2002 020 790
- US-A1- 2003 010 422
- US-A1- 2003 039 822
- US-A1- 2003 049 439

## Description

### BACKGROUND OF THE INVENTION

### Field of the Invention

The present invention relates to an adhesive tape. More particularly, the present invention relates to an adhesive tape which can be accurately attached to an adherend (e.g., a vertical frame of a vehicle door) having various configurations, and to a method of attaching the same.

### Description of the Related Art

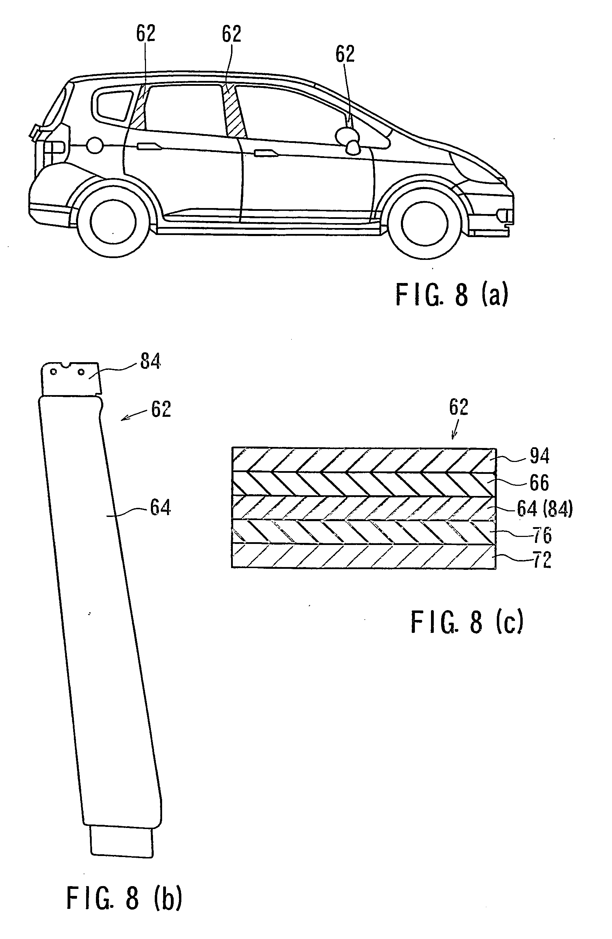

Generally, as shown in FIG. 8(a), an adhesive tape 62 having an ornamental layer is attached to a door frame portion, a pillar portion etc. (i.e. adherend) of a vehicle in order to enhance an appearance thereof. So as to ensure a good appearance of such a portion, it is necessary to accurately attach the adhesive tape 62 in conformity with the configurations of the portion to which the tape is adhered.

As shown in FIG. 8(b), the adhesive tape 62 is composed of a tape body 64 and a positioning tab 84 that is separated from the tape body 64. Further, as shown in FIG. 8(c), a common release sheet 72 is provided on the rear sides of the tape body 64 and the positioning tab 84 with an intervening adhesive layer 76 therebetween. Further, an application film 94 is provided on top or front sides of the tape body 64 and the tab 84 (the adhesive tape 62) with an intervening adhesive layer 66. As will be appreciated, the tape body 64 and the tab 84 are connected together by the application film 94. The positioning tab 84 constitutes an attachment portion for securing the tape body to a predetermined jig or fixing tool (not shown), and the tape body 64 constitutes a main portion that is adhered to the adherend.

The method of attaching the adhesive tape 62 (the tape body 64) is described below.
First, the positioning tab 84 is fixed to the fixing tool that is previously placed at a predetermined position. Then, the release sheet 72 is peeled off over the entire length thereof, and the tape body 64 is positioned on the adherend. In this condition, the tape body 64 is adhered vertically, i.e., top-to-bottom, to the adherend by using a spatula or the like. During this process, a lateral position of the tape body 64 is preferably visually adjusted. Subsequently, the application film 94 is peeled off, and the positioning tab 84 is removed together with the fixing tool. Finally, the tape body 64 is adhered in detail. Therefore, attaching of the tape body 64 is completed.

In the conventional adhesive tape 62, the tape body 64 and the positioning tab 84 are previously separated from each other, and are temporarily integrated with each other by means of the application film 94. Therefore, the positioning tab 84 can be easily removed from the tape body 64 by simply peeling off the application film 94. There is no need to cut off the positioning tab 84 from the tape body 64 in situ after the completion of the attaching of the tape body 64.

However, the application film 94 may lead to increased manufacturing costs of the adhesive tape 62. Also, in the conventional adhesive tape 62, the application film 94 must be discarded. As a result, an extra cost is involved in discarding the application film 94. Further, the tape body 64 is adhered vertically (top-to-bottom) to the adherend while visually adjusting the lateral position of the tape body 64. Therefore, when the tape body 64 has a large length (several tens of centimeters), the tape body 64 may be inclined during adhering so that a lower end portion of the tape body 64 can be laterally deviated on the adherend.

In the technical field relative to the closure of a diaper, EP-A-1 002 846 discloses an adhesive tape which has a more simple structure than the adhesive tape shown in figures 8a to 8c. This structure consists in a tape body provided with an adhesive layer on which are provided a removable release sheet and a fastener component located at an end of the tape body. In use, the end fastener component enables to fix the tab to a target area on the outside surface of a diaper or garment. After use, the part of the adhesive layer which is not covered anymore by the release sheet, is used to adhere to any area of the diaper, particularly in order to secure the diaper in a rolled-up configuration. The end fastener component is still present and extends outwardly from the rolled-up diaper. The visual effect is not pleasant, but can be tolerated for a diaper intended to be disposed in a waste receptacle. However, due to the fact that the end fastener component is permanently provided on the tape body, especially after adhering this tape body, the adhesive tape structure proposed in EP-A-1 002 846 is unacceptable for an application in which providing of a good appearance is wanted in an economical and fast way, for example for an application in the automobile industry.

Furthermore, US-A-2003/0049439 discloses an adhesive tape comprising a tape body provided both with a release strip and a strap permanently attached to the tape body. US-A-2003/0010422 discloses a tape for joining a web of a new reel to a web of a depleted reel, wherein an interface is interposed between a brakeaway coating of a lower part of a tape and a release coating of an upper part of the tape. Furthermore, DE-A-101 23 979, US-A-2003/0039822 and US-A-2002/0020790 disclose adhesive tapes, comprising a single-piece body.

### SUMMARY OF THE INVENTION

One object of the present invention is to provide an adhesive tape, the positioning tab of which can be separated in an easy, fast and economical way and with a great accuracy, especially in order to enhance the appearance of on adherend.

This object is achieved by an adhesive tape according to claim 1.

Thus, in the adhesive tape of the present invention, the tape body and the positioning tab are connected to each other via the connecting portion that can be cut off at a later time. Therefore, according to the adhesive tape of the present invention, it is not necessary to use an application film in order to integrate the tape body with the positioning tab.

Other objects, features, and advantages, of the present invention will be readily understood after reading the following detailed description together with the accompanying drawings and claims.

### BRIEF DESCRIPTION OF THE DRAWINGS

FIG. 1 is a plan view of an adhesive tape of the present invention;
FIG. 2 is a partially enlarged view of the adhesive tape;
FIG. 3 is a sectional view taken along a line III-III of FIG. 2;
FIG. 4 is a sectional view taken along a line IV-IV of FIG. 2;
FIG. 5 is a perspective view of a fixing tool;
FIGS. 6(a) to 6(i) are diagrams showing an attaching process of the adhesive tape;
FIG. 7 is a view similar to FIG. 2, illustrating a modified form of the adhesive tape;
FIG. 8(a) is a side view of a vehicle having a conventional adhesive tape;
FIG. 8(b) is a plan view of the conventional adhesive tape; and
FIG. 8(c) is a sectional view of the conventional adhesive tape.

### DETAILED DESCRIPTION OF THE PREFERRED EMBODIMENT

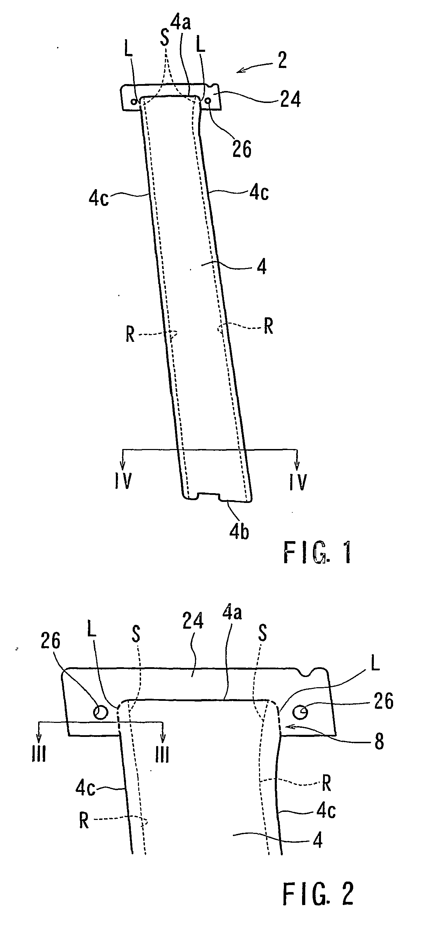

A detailed representative embodiment of the present teachings is shown in FIG. 1 to FIG. 6(i).
As shown in FIG. 1, an adhesive tape 2 of the present invention is composed of a tape body 4 and a positioning tab 24 (hereinafter simply referred to as a "tab"). The tape body 4 has a configuration corresponding to an attaching surface of an adherend (e.g., a frame of a vehicle door). In this embodiment, an elongated tape body for a vertical frame of a vehicle door is exemplified as the tape body 4.

The tape body 4 is formed of a sheet that can provide a good appearance to the adherend. Examples of such a sheet include a resin coated tape with color and pattern. Generally speaking, a protective layer is additionally provided on an outer surface of the sheet.

The tab 24 is positioned on one end periphery 4a (i.e., positioning end periphery) of the tape body 4 and is connected thereto via two connecting portions 8 that are partly positioned along one end periphery 4a of the tape body 4. As will be recognized, in this embodiment, one end periphery 4a corresponds to one of longitudinally opposed end peripheries of the tape body 4. The connecting portions 8 respectively include cutting lines L so that the tab 24 can be cut off from the tape body 4 at the connecting portions 8. Thus, the tab 24 is connected to the tape body 4 at a part of one end periphery 4a of the tape body 4. Further, the cutting lines L are, for example, perforations. That is, the cutting lines L means a portion that can be linearly ruptured therealong when external forces are applied thereto.

As described above, the tab 24 is connected to the tape body 4 at a part of one end periphery 4a of the tape body 4. The tab 24 is not connected to the tape body 4 along an entire length of one end periphery 4a. The reason is to reduce the ruptured traces of the cutting lines L after the cutting lines L have been cut or ruptured. However, if necessary, it is possible to provide a connecting portion (not shown) that extends over the entire length of one end periphery 4a of the tape body 4, so that the tab 24 can be connected to the tape body 4 along the entire length of one end periphery 4a.

Generally speaking, the connecting portions 8 (the cutting lines L) are appropriately formed so that the ruptured traces can be inconspicuous after the tape body 4 is attached to the adherend. As shown explicitly in FIG. 2, in this embodiment, the cutting lines L are formed in side portions of one end periphery 4a of the tape body 4. As will be recognized, these portions of one end periphery 4a are folded back toward a rear side of the adherend (i.e., the vehicle door vertical frame) or covered with a weather strip, a garnish or other such members after the tape body 4 has been attached. Therefore, the ruptured traces of the cutting lines L are generally invisible from the outside.

In this embodiment, the tab 24 is formed as a single or one-piece member. However, it is possible to use a plurality of tabs (not shown) that are separately formed. Also, the tab 24 can be connected to one end periphery 4a of the tape body 4 via a single connecting portion (not shown), if necessary.

As shown in FIG. 1, the tab 24 is previously separated from or cut off from one end periphery 4a of the tape body 4 except for the connecting portions 8. That is, a slit or the like is formed between the tab 24 and one end periphery 4a of the tape body 4 except for the connecting portions 8 so that the tab 24 is generally separated from one end periphery 4a. Thus, although the tab 24 is cut off from one end periphery 4a of the tape body 4 except for the connecting portions 8, the tab 24 and the tape body 4 are closely integrated with each other. That is, there is substantially no gap between the tab 24 and the tape body 4. Therefore, it is possible to easily position the tape body 4 onto the adherend. Also, this may lead to increased operability of the adhesive tape 2.

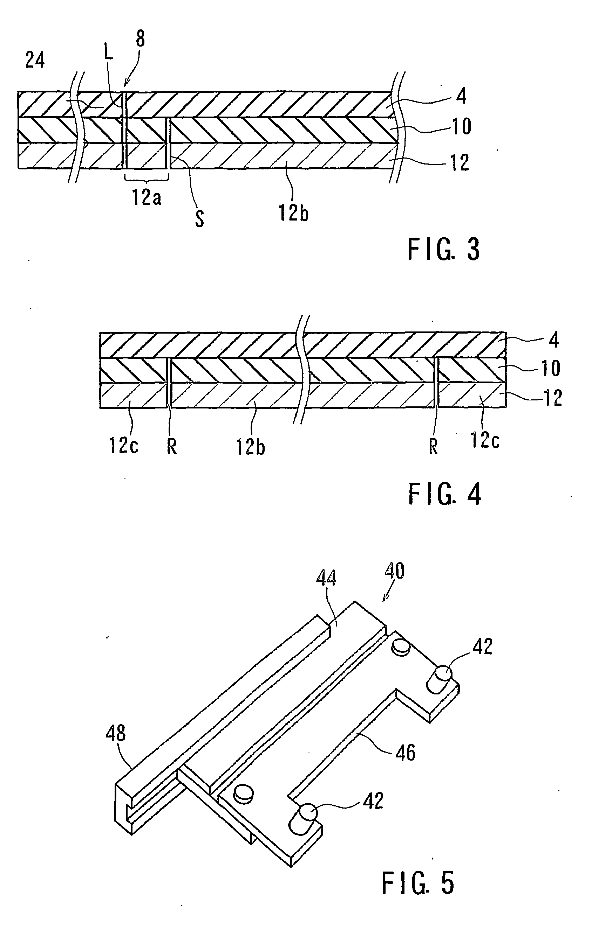

The tab 24 is formed with two positioning holes 26 (i.e., fixing element). The holes 26 are arranged and constructed so as to be engageable with two corresponding protrusions 42 (i.e., fixing element, which will be described hereinafter) that are formed in a jig or fixing tool 40 (FIG. 5). Preferably, the holes 26 are arranged adjacent to the connecting portions 8.

Further, the fixing element is not limited to the combination of the holes 26 and the protrusions 42. The fixing element may also be a clipping means, an adhesion means or other such means. The fixing element may also be a means that allows an operator to directly fix the tab 24 to the adherend. In this case, the fixing tool 40 can be omitted.

As shown in FIGS. 3 and 4, the tape body 4 is provided with an adhesive layer 10. A release sheet 12 is attached to the adhesive layer 10. The release sheet 12 may preferably cover the entire adhesive layer 10 of the tape body 4. Further, the adhesive layer 10 extends over the tab 24. Similarly, the release sheet 12 also extends over the tab 24 so as to cover the adhesive layer 10 of the tab 24. The release sheet 12 on the tab 24 is useful to reliably fix the adhesive tape 2 to the fixing tool 40 when the adhesive tape 2 is fixed to the fixing tool 40 by utilizing the fixing elements 26. Further, the adhesive layer 10 of the tab 24 may also be utilized as the fixing element.

As shown in FIGS. 2 and 3, formed in the release sheet 12 of the tape body 4 are slits S that are positioned adjacent to the cutting lines L. Further, as shown in FIGS. 1 to 4, formed in side peripheries (i.e., laterally opposed peripheries) of the release sheet 12 of the tape body 4 are slits R that extend in a longitudinal direction thereof. In this embodiment, the slits R are formed so as to be longitudinally aligned with the slits S. As will be appreciated, the slits R thus formed extend along laterally opposed peripheries 4c of the tape body 4. As will be apparent from FIG. 3, the cutting lines L penetrate through the tape body 4 and the release sheet 12.

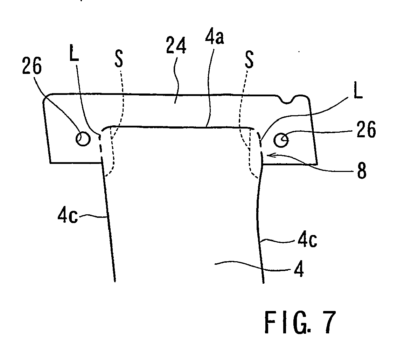

Thus, since the slits S and R are formed in the release sheet 12, it is possible to peel off only a central area 12b of the release sheet 12, while leaving side peripheral areas 12a and 12c thereof. Therefore, the side peripheral areas 12a and 12c of the release sheet 12 may preferably be left during the tape attaching process so that the tape body 4 can be accurately attached to the adherend. As will be appreciated, the slits S and R can be omitted, if necessary. For example, as shown in FIG. 7, only the slits S can be formed in the release sheet 12 so as to be positioned adjacent to the cutting lines L.

As shown in FIG. 5, the fixing tool 40 has the protrusions 42. Further, the fixing tool 40 has a support portion 44 that can supports the tab 24. The support portion 44 has a support end edge 46 which corresponds to the positioning end periphery 4a of the tape body 4 when the support portion 44 supports the tab 24. Thus, because the fixing tool 40 has the support portion 44 along with the support end edge 46, it is possible to easily separate the tab 24. from the tape body 4 during the tape attaching process.

Further, the fixing tool 40 has a moving mechanism for moving the support portion 44. That is, the support portion 44 is slidably engaged with a guide groove formed in a base 48. Because the support portion 44 is slidably mounted on the base 48, the position of the support portion 44 (i.e., the corresponding position of the adhesive tape 2) can be easily adjusted after the fixing tool 40 being attached to the adherend via the base 48. As a result, it is possible to attach the adhesive tape 2 (the tape body 4) easily and accurately. The moving mechanism for moving the support portion 44 is not limited to the slide mechanism described above and may be some other type of moving mechanisms. For example, it is also possible to use a combination of a recessed groove formed in the support portion 44 an a rail provided on the base 48. Further, it is also possible to use a magnet or other such elements so as to detachably mount the support portion 44 to the base 48.
Typically, the fixing tool 40 thus constructed is attached to the adherend by using a well-known means such as a magnet.

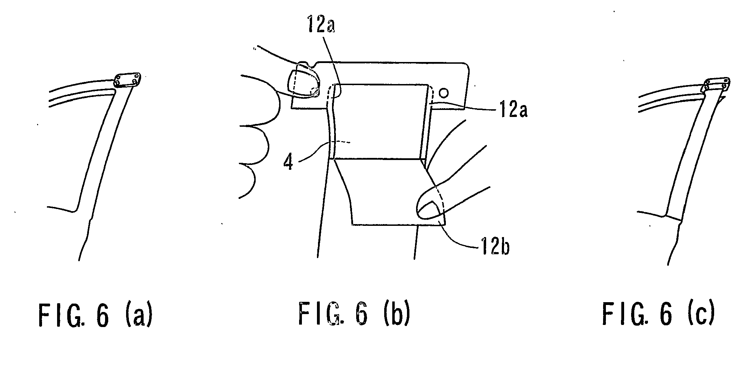

Next, an attaching method for the adhesive tape 2 will be described with reference to FIGS. 6(a) to 6(i).
First, as shown in FIG. 6(a), the fixing tool 40 is disposed on the vertical frame (adherend) of a front door or the vicinity thereof. The fixing tool 40 may preferably be located such that the tape body 4 is appropriately positioned on the attaching surface of the vertical frame when the holes 26 of the tab 24 are engaged with the protrusions 42 of the support portion 44. In other words, the fixing tool 40 may preferably be positioned such that the tab 24 does not overlap with the attaching surface of the vertical frame when the holes 26 of the tab 24 are engaged with the protrusions 42 of the support portion 44.

Next, the holes 26 are engaged with the protrusions 42 so that the tab 24 is attached to the fixing tool 40 (FIG. 6(c)). Typically, as shown in FIG. 6(b), before the tab 24 is attached to the fixing tool 40, the release sheet 12 (the central area 12b) of the tape body 4 is partly peeled off downwardly from the positioning end periphery (one end periphery 4a). This makes it convenient for a worker to peel off the release sheet 12 during subsequent attaching steps.

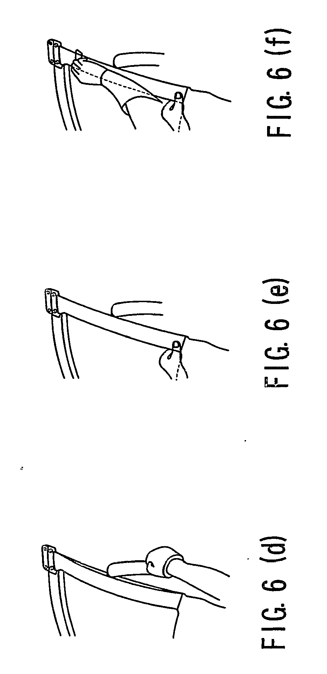

Subsequently, as shown in FIG. 6(d), the partly peeled release sheet 12 (the central area 12b) of the set adhesive tape 2 is further peeled off downwardly from the positioning end periphery 4a. At this time, the release sheet 12 may preferably be peeled off over approximately one-half of the length of the tape body 4 (i.e., 30 to 60%, more preferably, 40 to 60% of the tape body length) from the positioning end periphery 4a. That is, the release sheet 12 may preferably be peeled off from the positioning end periphery 4a over a substantially central portion of the tape body 4. Further, in this condition, an upper portion of the tape body 4 in which the release sheet 12 is peeled off is not yet sufficiently or firmly adhered to the attaching surface of the adherend.

Thereafter, as shown in FIG. 6(e), the other end periphery 4b of the tape body 4 (i.e., an end periphery longitudinally opposite to the positioning end periphery 4a of the tape body 4) is desirably positioned. As described above, in this condition, the upper portion of the tape body 4 in which the release sheet 12 is peeled off is not yet substantially adhered to the attaching surface of the adherend. Therefore, the tape body 4 is then adhered to the front door vertical frame by pressing the tape body 4 from the other end periphery 4b toward the positioning end periphery 4a (FIG. 6(f)). Typically, the tape body 4 is adhered to the attaching surface of the adherend utilizing a spatula or other such tools.

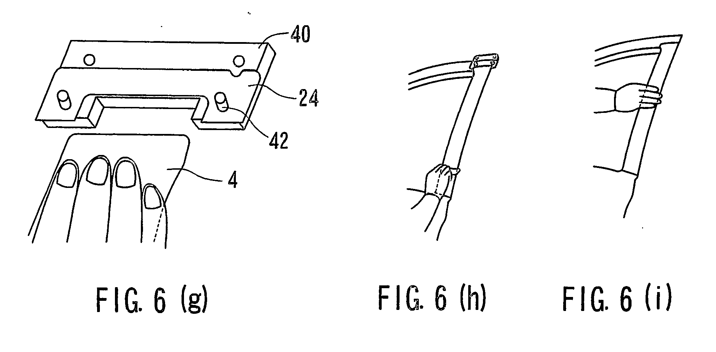

When the tape body 4 is thus adhered to the front door vertical frame, in the vicinity of the positioning end periphery 4a of the tape body 4, stress is concentrated at the cutting lines L (the connecting portion 8) by means of the support end edge 46 of the support portion 44 of the fixing tool 40. As a result, as shown in FIG. 6(g), the cutting lines L are ruptured so that the tab 24 is separated from the tape body 4 along the cutting lines L. Further, because the cutting lines L are formed in only a part of the positioning end periphery 4a, the stress concentrated on the cutting lines L is very large causing the connecting portions 8 to be cut off reliably and neatly along the cutting lines L.

Thus, according to the present attaching method, the tape body 4 is adhered from the other end periphery 4b toward the positioning end periphery (one end periphery 4a). As a result, the tape body 4 can be accurately adhered to the attaching surface over substantially an upper half length thereof (i.e., a portion from one end periphery 4a to the central portion).

Because the slits S and R are formed in the release sheet 12, the side peripheral areas 12a and 12c of the release sheet 12 are not peeled off and remain on the tape body 4. The side peripheral areas 12a and 12c thus remain, and may further efficiently and properly concentrate the stress onto the cutting lines L so that the connecting portions 8 are appropriately cut off along the cutting lines L.

After the tab 24 is separated from the tape body 4 along the cutting lines L, the tape body 4, separated from the tab 24, is adhered to the attaching surface of the adherend in the vicinity of the positioning end periphery 4a. As a result, the tape body 4 is attached to the adherend over substantially an upper half of the tape body 4 (i.e., from the positioning end periphery 4a to the central portion). Thus, a former half (i.e., first attaching process) of the attaching process of the tape body 4 is completed. In this condition, the side peripheral areas 12a and 12c of the release sheet 12 remain on the tape body 4.

Next, as shown in FIG. 6(h), a remaining portion of the release sheet 12 (the central area 12b) is peeled off, and the tape body 4 is adhered to the front door vertical frame by pressing the tape body 4 from one end periphery 4a toward the other end periphery 4b (i.e., an end periphery opposite to the positioning end periphery 4a). At this time, because the upper half of the tape body 4 adjacent to the positioning end periphery 4a has already been accurately adhered, a lower half of the tape body 4 (i.e., a portion from the central portion to the other end periphery 4b) can also be adhered easily and accurately. Thus, the tape body 4 is adhered to the adherend (the front door vertical frame) over the entire length thereof.

When the tape body 4 is adhered over the entire length thereof, the side peripheral areas 12a and 12c of the release sheet 12 are peeled off. Thereafter, as shown in FIG. 6(i), the remaining areas (i.e., peripheral areas) of the tape body 4 that correspond to the side peripheral areas 12a and 12c of the release sheet 12 are adhered.
Thus, a latter half (i.e., second attaching process) of the attaching process of the tape body 4 is completed.

According to this method, the peripheral areas of the tape body 4 (i.e., areas corresponding to the side peripheral areas 12a and 12c of the release sheet 12) are adhered lastly. Therefore, deviation of the tape body 4 can be avoided or corrected. As a result, the adhesive tape 2 (the tape body 4) can be attached accurately to the adherend.

In the attaching method, the side peripheral areas 12a and 12c of the release sheet 12 are peeled off after the first and second attaching processes are completed. However, it is possible to peel off a part of the side peripheral areas 12a and 12c of the release sheet 12 after the first attaching process is completed, and to peel off a remaining part thereof after the second attaching process is completed.

In this embodiment, although the elongated tape body for the vertical frame of the vehicle door is exemplified as the tape body 4, the tape body 4 of the present invention is not limited to such a configuration. Further, the adhesive tape 2 is not limited to the adhesive tape for a vehicle.

Because the adhesive tape of the present invention does not use an application film, the manufacturing cost of the adhesive tape can be reduced. Further, a separate cost for discarding the application film is not necessary. In addition, according to the adhesive tape attaching method of the present invention, the adhesive tape can be attached easily and accurately to the adherend

. A representative example of the present invention has been described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the foregoing detailed description may not be necessary to practice the invention in the broadest sense, and are instead taught merely to particularly describe detailed representative examples of the invention. Moreover, the various features taught in this specification may be combined in ways that are not specifically enumerated in order to obtain additional useful embodiments of the present teachings.

## Claims

1. An adhesive tape (2), comprising:
- a tape body (4) having an adhesive rear side that is intended to be adhered to an adherend and that is covered by a removable release sheet (12), and
- a positioning tab (24) positioned on one end periphery (4a) of the tape body and adapted to fix the position of the tape body with respect to the adherend,
**characterised in that** the positioning tab (24) is integral with the tape body (4) via at least one connection portion (8) that is positioned between the tape body and the positioning tab and that is adapted to be linearly ruptured so that the positioning tab is separated from the tape body when external forces are applied thereto.

2. An adhesive tape as defined in claim 1, wherein the or each connection portion (8) includes a cutting line (L) adapted to be linearly ruptured therealong when external forces are applied thereto.

3. An adhesive tape as defined in any of claim 1 or 2, wherein the positioning tab (24) is positioned along the one end periphery (4a), and wherein the or each connecting portion (8) is partly provided on the one end periphery so that the tab is separated from the tape body except for the or each connecting portion.

4. An adhesive tape as defined in any of claims 1 to 3, wherein the release sheet (12) is provided on the entire area of the rear side of the tape body (4), and wherein the release sheet has a slit (S) that is formed adjacent to the or each connecting portion (8).

5. An adhesive tape as defined in claim 4, wherein the release sheet (12) has an additional slit (R) that is formed in a side periphery thereof.

6. An adhesive tape as defined in any of claims 1 to 5, wherein the release sheet (12) extends onto a rear side of the positioning tab (24) beyond the or each connecting portion (8).

7. An adhesive tape as defined in any of claims 1 to 6, wherein the positioning tab (24) has a fixing element (26) that is positioned adjacent to the or each connecting portion (8).

8. An adhesive tape as defined in any of claims 4 to 7, wherein the tape body (4) comprises an elongated tape body, wherein the one end periphery (4a) of the tape body corresponds to one of longitudinally opposed end peripheries of the tape body, and wherein the slit (S) is formed so as to extend along one of laterally opposed end peripheries of the tape body.

9. An adhesive tape as defined in any of claims 1 to 8, wherein the adhesive tape (2) is designed for a vertical frame of a vehicle door.

10. A method for attaching an adhesive tape (2) to an adherend, the adhesive tape comprising a tape body (4), a positioning tab (24) separably connected to one end periphery (4a) of the tape body, and a release sheet (12) provided on a rear side of the tape body, the method comprising:
a first attaching process comprising the steps of :
locating the adhesive tape (2) to the adherend,
removing a part of the release sheet (12) from the one end periphery (4a) toward the other end periphery of the tape body (4) and positioning the other end periphery of the tape body, and
adhering a part of the tape body (4) in which the release sheet (12) is removed, by pressing the part of the tape body from the other end periphery toward the one end periphery, as well as separating the positioning tab (24) from the tape body; and
a second attaching process comprising the steps of :
removing a remaining part of the release sheet (12), and
adhering a remaining part of the tape body (4) by pressing the remaining part of the tape body from the one end periphery (4a) toward the other end periphery.

11. A method as defined in claim 10, wherein the step of separating the positioning tab (24) from the tape body (4) comprises applying external forces to at least one connection portion (8) that is integrally formed between the tape body (4) and the positioning tab (24) so that the or each connection portion is linearly ruptured.

12. A method as defined in any of claim 10 or 11, wherein the steps of removing the release sheet (12) of the first and second attaching processes comprise removing only a central area (12b) of the release sheet (12).

13. A method as defined in claim 12, further comprising the step of removing a remaining area (12a, 12c) of the release sheet (12) after completion of the first and second attaching processes.

14. A method for manufacturing a product having an adherend and an adhesive tape (2) attached thereto, the method comprising a method as defined in any of claims 10 to 13.

## Patentansprüche

1. Klebeband (2) umfassend:
- einen Bandkörper (4), der eine haftende Rückseite aufweist, die vorgesehen ist, an einem zu beklebenden Gegenstand zu haften, und die mit einem entfernbaren Freigabeblatt (12) bedeckt ist und
- einem Positioniererflansch (24), der an einem Umfang (4a) eines Endes des Bandkörpers positioniert ist und geeignet ist, die Position des Bandkörpers in Bezug auf den zu beklebenden Gegenstand zu fixieren,
**dadurch gekennzeichnet, dass** der Positionierflansch (24) integral mit dem Bandkörper (4) über mindestens einen Verbindungsbereich (8) gebildet ist, der zwischen dem Bandkörper und dem Positionierflansch positioniert ist und der ausgebildet ist, linear zu reißen, so dass der Positionierflansch von dem Bandkörper getrennt wird, wenn äußere Kräfte darauf aufgebracht werden.

2. Klebeband nach Anspruch 1, bei dem der oder jeder Verbindungsbereich (8) eine Trennlinie (L) umfasst, die ausgebildet ist, linear daran entlang zu reißen, wenn äußere Kräfte darauf augebracht werden.

3. Klebeband nach einem der Ansprüche 1 oder 2, bei dem der Positioniererflansch (24) längs des Umfangs (4a) des einen Endes positioniert ist und bei dem der oder jeder Verbindungsbereich (8) teilweise an dem Umfang des Endes vorgesehen ist, so dass der Flansch von dem Bandkörper getrennt wird, mit Ausnahme des oder jedes Verbindungsbereichs.

4. Klebeband nach einem der Ansprüche 1 bis 3, bei dem das Freigabeblatt (12) auf der gesamten Rückseite des Bandkörpers (4) vorgesehen ist und bei dem das Freigabeblatt einen Schlitz (S) aufweist, der benachbart zu dem oder jedem Verbindungsbereich (8) angeordnet ist.

5. Klebeband nach Anspruch 4, bei dem das Freigabeblatt (12) einen zusätzlichen Schlitz (R) aufweist, der in seinem Seitenumfang ausgeformt ist.

6. Klebeband nach einem der Ansprüche 1 bis 5, bei dem das Freigabeblatt (12) sich auf der Rückseite des Positionierflansches (24) über den oder jeden Verbindungsbereich (8) hinaus erstreckt.

7. Klebeband nach einem der Ansprüche 1 bis 6, bei dem der Verbindungsflansch (24) ein Befestigungselement (26) aufweist, das benachbart zu dem oder jedem Verbindungsbereich (8) angeordnet ist.

8. Klebeband nach einem der Ansprüche 4 bis 7, bei dem der Bandkörper (4) einen lang gestreckten Bandkörper umfasst, wobei der Umfang (4a) des einen Endes des Bandkörpers einem der längs gegenüberliegenden Umfängen des einen Endes des Körpers entspricht und wobei der Schlitz (S) so geformt ist, dass er sich entlang eines von seitlich gegenüberliegenden Umfängen des Endes des Bandkörpers erstreckt.

9. Klebeband nach einem der Ansprüche 1 bis 8, wobei das Klebeband (2) für einen senkrechten Rahmen einer Fahrzeugtür entworfen ist.

10. Verfahren zum Befestigen eines Klebebands (2) an einem zu beklebenden Gegenstand, einen Bandkörper (4), einen Positionierflansch (24), der trennbar mit einem Umfang eines Endes (4a) des Bandkörpers verbunden ist, und ein auf einer Rückseite des Bandkörpers vorgesehenes Freigabeblatt (12) umfassend, wobei das Verfahren umfasst:
einen ersten Befestigungsvorgang, umfassend die Schritte:
Anordnen des Klebebandes (2) an dem zu beklebenden Gegenstand,
Entfernen eines Teils des Freigabeblatts (12) von dem Umfang des einen Endes (4a) in Richtung des Umfangs des anderen Endes des Bandkörpers (4) und Positionieren des Umfangs des anderen Endes des Bandkörpers, und
Ankleben eines Teils des Bandkörpers (4), bei dem das Freigabeblatt (12) entfernt ist, durch Andrücken des Teils des Bandkörpers von dem Umfang des anderen Endes zu dem Umfang des einen Endes, sowie Trennen des Positionierflansches (24) vom Bandkörper; und
einen zweiten Befestigungsvorgang, der die Schritte umfasst:
Entfernen des restlichen Teils des Freigabeblatts (12), und
Ankleben eines restlichen Teils des Bandkörpers (4) durch Andrücken des restlichen Teils des Bandkörpers von dem Umfang (4a) des einen Endes zu dem Umfang des anderen Endes.

11. Verfahren nach Anspruch 10, bei dem der Schritt des Trennens des Positionierflansches (24) von dem Bandkörper (4) das Aufbringen externer Kräfte auf mindestens einen Verbindungsbereich (8) umfasst, der integral zwischen dem Bandkörper (4) und dem Positionierflansch (24) gebildet ist, so dass der oder jeder Verbindungsbereich linear abreißt.

12. Verfahren nach einem der Ansprüche 10 oder 11, bei dem die Schritte des Entfernens des Freigabeblatts (12) des ersten und zweiten Befestigungsvorgangs nur das Entfernen eines mittleren Bereichs (12b) des Freigabeblatts (12) umfasst.

13. Verfahren nach Anspruch 12, weiter den Schritt des Entfernens eines Restbereichs (12a, 12c) des Freigabeblattes (12) nach der Beendigung des ersten und zweiten Befestigungsvorgangs umfassend.

14. Verfahren zum Herstellen eines Produkts, das einen zu beklebenden Gegenstand und ein daran befestigtes Klebeband (2) aufweist, wobei das Verfahren ein Verfahren umfasst, wie es in einem der Ansprüche 10 bis 13 definiert ist.

## Revendications

1. Bande adhésive (2), comportant :
- un corps de bande (4) présentant une face arrière adhésive qui est destinée à être collée à un support et qui est recouverte d'une feuille décollable amovible (12), et
- une languette de positionnement (24) positionnée à une périphérie d'extrémité (4a) du corps de bande et adaptée pour fixer la position du corps de bande par rapport au support,
**caractérisée en ce que** la languette (24) de positionnement est venue de matière avec le corps de bande (4) par l'intermédiaire d'au moins une partie de raccordement (8) qui est positionnée entre le corps de bande et la languette de positionnement et qui est adaptée pour être rompue linéairement de telle sorte que la languette de positionnement est séparée du corps de bande lorsque des forces externes lui sont appliquées.

2. Bande adhésive selon la revendication 1, la ou chaque partie de raccordement (8) comprenant une ligne de découpe (L) adaptée pour être rompue linéairement le long de celle-ci lorsque des forces externes lui sont appliquées.

3. Bande adhésive selon l'une quelconque des revendications 1 ou 2, dans laquelle la languette de positionnement (24) étant positionnée le long de ladite périphérie d'extrémité (4a), et la ou chaque partie de raccordement (8) est partiellement prévue à ladite périphérie d'extrémité de telle sorte que la languette est séparée du corps de bande à l'exception de la ou chaque partie de raccordement.

4. Bande adhésive selon l'une quelconque des revendications 1 à 3, dans laquelle la feuille décollable (12) est mise en place sur toute la surface de la face arrière du corps de bande (4), et la feuille décollable présente une fente (S) formée au voisinage de la ou chaque partie de raccordement (8).

5. Bande adhésive selon la revendication 4, la feuille décollable (12) présentant une fente supplémentaire (R) formée dans une périphérie latérale de celle-ci.

6. Bande adhésive selon l'une quelconque des revendications 1 à 5, la feuille décollable (12) s'étendant jusque sur une face arrière de la languette de positionnement (24) au-delà de la ou chaque partie de raccordement (8).

7. Bande adhésive selon l'une quelconque des revendications 1 à 6, la languette de positionnement (24) étant dotée d'un élément de fixation (26) positionné au voisinage de la ou chaque partie de raccordement (8).

8. Bande adhésive selon l'une quelconque des revendications 4 à 7, dans laquelle le corps de bande (4) comporte un corps de bande allongé, ladite périphérie d'extrémité (4a) du corps de bande correspond à l'une des périphéries d'extrémité longitudinalement opposées du corps de bande, et la fente (S) est formée de façon à s'étendre le long de l'une des périphéries d'extrémité latéralement opposées du corps de bande.

9. Bande adhésive selon l'une quelconque des revendications 1 à 8, la bande adhésive (2) étant conçue pour un cadre vertical d'une portière de véhicule.

10. Procédé de fixation d'une bande adhésive (2) à un support, la bande adhésive comportant un corps de bande (4), une languette de positionnement (24) reliée de façon détachable à une périphérie d'extrémité (4a) du corps de bande, et une feuille décollable (12) prévue sur une face arrière du corps de bande, le procédé comportant :
un premier processus de fixation, comportant les étapes consistant à :
positionner la bande adhésive (2) par rapport au support,
retirer une partie de la feuille décollable (12) depuis ladite périphérie d'extrémité (4a) en direction de l'autre périphérie d'extrémité du corps de bande (4) et positionner l'autre périphérie d'extrémité du corps de bande, et
coller une partie du corps de bande (4) de laquelle la feuille décollable (12) a été retirée, en pressant la partie du corps de bande depuis l'autre périphérie d'extrémité vers ladite périphérie d'extrémité, tout en séparant la languette de positionnement (24) du corps de bande ; et
un deuxième processus de fixation, comportant les étapes consistant à :
retirer une partie restante de la feuille décollable (12), et
coller une partie restante du corps de bande (4) en pressant la partie restante du corps de bande depuis ladite périphérie d'extrémité (4a) vers l'autre périphérie d'extrémité.

11. Procédé selon la revendication 10, l'étape consistant à séparer la languette de positionnement (24) du corps de bande (4) comportant l'application de forces externes à au moins une partie de raccordement (8) venue de matière entre le corps de bande (4) et la languette de positionnement (24) de telle sorte que la ou chaque partie de raccordement est rompue linéairement.

12. Procédé selon l'une des revendications 10 ou 11, les étapes consistant à retirer la feuille décollable (12) des premier et deuxième processus de fixation comportant le fait de ne retirer qu'une zone centrale (12b) de la feuille décollable (12).

13. Procédé selon la revendication 12, comportant en outre l'étape consistant à retirer une zone restante (12a, 12c) de la feuille décollable (12) après l'achèvement des premier et deuxième processus de fixation.

14. Procédé de fabrication d'un produit présentant un support et auquel est fixée une bande adhésive (2), le procédé comportant un procédé selon l'une quelconque des revendications 10 à 13.
